# EUROPEAN PATENT SPECIFICATION

(11) **EP 2 874 423 B1**
(45) Date of publication and mention of the grant of the patent: **04.10.2017**
(21) Application number: 13832307.6
(22) Date of filing: 27.05.2013
(51) Int. Cl.: H04W 12/08, H04W 12/04, H04W 84/12, H04W 12/10

(54) **DATA TRANSMISSION METHOD, ACCESS POINT AND STATION**
DATENÜBERTRAGUNGSVERFAHREN, ZUGANGSPUNKT UND STATION
PROCÉDÉ POUR LA TRANSMISSION DE DONNÉES, POINT D'ACCÈS ET STATION CORRESPONDANTS

(30) Priority: 31.08.2012 CN 201210317221
(43) Date of publication of application: 20.05.2015
(73) Proprietor: Huawei Technologies Co., Ltd., Longgang District Shenzhen, Guangdong 518129 (CN)
(72) Inventor: WU, Tianyu, Shenzhen Guangdong 518129 (CN); LOC, Peter, Cupertino, CA 95014 (US); LI, Yunbo, Shenzhen Guangdong 518129 (CN)
(74) Representative: Pfenning, Meinig & Partner mbB
(86) International application number: PCT/CN2013/076241
(87) International publication number: WO 2014/032442

(56) References cited:
- CN-A- 101 189 858
- CN-A- 101 222 388
- CN-A- 102 293 035
- Zaffar I Qureshi ET AL: "Using Randomized Association ID to Detect and Prevent Spoofed PS-Poll Based Denial of Service Attacks in IEEE 802.11 WLANs", , 1 March 2008 (2008-03-01), pages 170-179, XP055207159, Retrieved from the Internet: URL:http://www.wseas.us/e-library/transact ions/communications/2008/25-429.pdf [retrieved on 2015-08-11]
- MYNENI S ET AL: "IEEE 802.11 Wireless LAN Control Frame Protection", CONSUMER COMMUNICATIONS AND NETWORKING CONFERENCE (CCNC), 2010 7TH IEEE, IEEE, PISCATAWAY, NJ, USA, 9 January 2010 (2010-01-09), pages 1-5, XP031642752, ISBN: 978-1-4244-5175-3

## Description

### TECHNICAL FIELD

The present invention relates to the field of communications, and in particular, to a method for transmitting data, an access point and a station.

### BACKGROUND

In a wireless local area networks (Wireless Local Area Networks, WLAN) system, power saving performance is an important performance index. Most stations (Station, STA) of a WLAN work in a power saving mode. In this mode, the STA is in a sleep state when no data needs to be transmitted. An AP will regularly send a beacon (Beacon) frame, and carries a traffic indication map (Traffic Indication Map, TIM) element (element) in the Beacon frame for indicating which STAs in a basic service set (Basic Service Set, BSS) have downlink data. If an STA hears about its own downlink data in a TIM domain of the beacon frame after waking up, then the STA will retrieve the downlink data cached on the AP from the AP by use of a PS-POLL (Power Save-POLL, power save-poll) frame.

At present, in the WLAN system, it is specified that a control frame has no protection mechanism, thus the existing PS-POLL frame serving as a control frame has no security protection mechanism neither. But since the PS-POLL frame is used by a target STA to notify the AP associated with it to issue the downlink data, a security hole may exist. For example, when the STA is in the sleep state, a third party station is quite easy to pretend to be the target STA, and sends the PS-POLL frame to the AP by use of an association identifier (Association Identifier, AID) of the target STA. After receiving the PS-POLL frame, the AP will mistake that the target STA has waken up, and send the downlink data cached on the AP to the target STA. After receiving the downlink data, the third party station sends an acknowledgement frame to the AP, causing the AP to mistake that the downlink data to the target STA have been successfully sent and to delete the data from the cache. Therefore, the third party station may steal or delete the downlink data of the target STA and even block the communication between the AP and the target STA without the awareness of the AP and the target STA, such that the system performance is severely influenced and the network security is harmed.

Document (Zaffar Qureshi ET AL: "Using Randomized Association ID to Detect and Prevent Spoofed PS-Poll Based Denial of Service Attacks in IEEE 802.11 WLANs", XP055207159) discloses a robust solution based on encryption of AID field in PS-Poll message using pre established PTK.

### SUMMARY

Embodiments of the present invention provide a method for transmitting data, an access point and a station, which may be used for preventing a third party station from pretending to be the station to steal downlink data, in order to ensure the network security.

In a first aspect, a method for transmitting data is provided, including:
generating, by an access point, AP, a key after receiving a sleep mode request frame from a station;
sending, by the AP, the key to the station;
receiving, by the AP, a downlink data request frame from the station;
verifying, by the AP, the downlink data request frame according to the key and obtaining a verification result;
sending, by the AP, downlink data to the station if the verification result is that the downlink data request frame is correct.

In a second aspect, a method for transmitting data is provided, including:
receiving, by a station, a sleep mode response frame from an access point, wherein the sleep mode response frame carries a encrypted key, and the sleep mode response frame is sent by the access point after receiving a sleep mode request frame from the station; sending, by the station, a downlink data request frame to the access point, wherein the downlink data request frame carries the encrypted key, and the key is used by the access point for verifying the downlink data request frame and obtaining a verification result;
receiving, by the station, downlink data sent by the access point, wherein the downlink data are sent by the access point after the verification result is that the downlink data request frame is correct.

In a third aspect, an access point is provided, including:
a generating unit, configured to generate a key after receiving a sleep mode request frame from a station; a sending unit, configured to send the key to the station; a receiving unit, configured to receive a downlink data request frame from the station; a verifying unit, configured to verify the downlink data request frame according to the key and obtain a verification result; the sending unit is further configured to send downlink data to the station if the verification result is that the downlink data request frame is correct.

In a fourth aspect, a station is provided, including: a receiving unit, configured to receive a sleep mode response frame from an access point, the sleep mode response frame carries a encrypted key, and the sleep mode response frame is sent by the access point after receiving a sleep mode request frame from the station; a sending unit, configured to send a downlink data request frame to the access point, wherein the downlink data request frame carries the encrypted key, and the key is used by the access point for verifying the downlink data request frame and obtaining a verification result; the receiving unit is further configured to receive downlink data sent by the access point, wherein the downlink data is sent by the access point after the verification result is that the downlink data request frame is correct.

In the embodiments of the present invention, the key is generated, the key is sent to the station, and after the downlink data request frame is received, if the downlink data request frame is verified to be correct according to the key, the downlink data are sent to the station, thus the third party station may be prevented from pretending to be the station to steal the downlink data, such that the network security may be ensured.

### BRIEF DESCRIPTION OF DRAWINGS

To illustrate technical solutions in the embodiments of the present invention more clearly, a brief introduction on the accompanying drawings which are needed in the description of the embodiments is given below. Apparently, the accompanying drawings in the description below are merely some of the embodiments of the present invention, based on which other drawings may be obtained by those of ordinary skill in the art without any creative effort.
Fig.1 is a schematic flowchart of a method for transmitting data according to an embodiment of the present invention.
Fig.2 is a schematic flowchart of a method for transmitting data according to an embodiment of the present invention.
Fig.3 is a schematic flowchart of a process of a method for transmitting data according to an embodiment of the present invention.
Fig.4 is a schematic diagram of an example of a format of a WNM sleep mode response frame according to an embodiment of the present invention.
Fig.5 is a schematic diagram of an example of a format of a downlink data request frame according to an embodiment of the present invention.
Fig.6 is a schematic flowchart of a process of a method for transmitting data according to an embodiment of the present invention.
Fig.7 is a schematic block diagram of an AP according to an embodiment of the present invention.
Fig.8 is a schematic block diagram of an STA according to an embodiment of the present invention.
Fig.9 is a schematic diagram of a structure of an AP provided by an embodiment of the present invention.
Fig.10 is a schematic diagram of a structure of an STA provided by an embodiment of the present invention.

### DESCRIPTION OF EMBODIMENTS

A clear and complete description of technical solutions in the embodiments of the present invention will be given below in conjunction with the accompanying drawings in the embodiments of the present invention. Obviously, the embodiments described are merely a part, but not all, of the embodiments of the present invention. All of other embodiments, obtained by those of ordinary skill in the art based on the embodiments in the present invention without any creative effort, fall into the protection scope of the present invention.

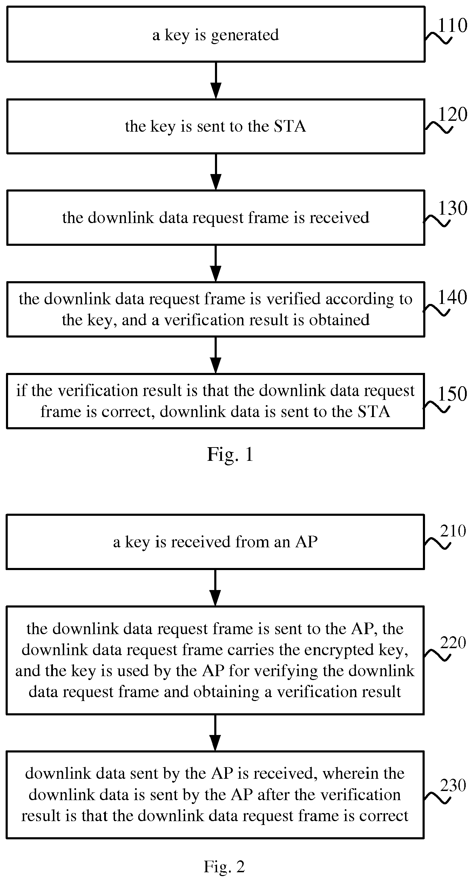

Fig.1 is a schematic flowchart of a method for transmitting data according to an embodiment of the present invention. The method of Fig.1 is implemented by an AP in a WLAN system.

110, a key is generated.

The key may be used by an STA for protecting a downlink data request frame.

Optionally, as an embodiment, the AP may generate the key after receiving a sleep mode request frame from a station (Station, STA). The sleep mode request frame may be used for indicating that the STA is about to enter into a sleep mode. In this way, there is no need to modify the format of the sleep mode request frame.

Optionally, as another embodiment, the AP may generate the key after receiving the sleep mode request frame from the STA, and if the sleep mode request frame indicates that the STA needs the key. That is to say, if the AP receives the sleep mode request frame of the STA and the sleep mode request frame indicates that the STA needs the key, the AP may generate the key.

In addition, the sleep mode request frame may also indicate that the STA needs no key, in this way, the STA may reuse the key previously notified by the AP. Thus, selection flexibility of the STA is provided, for example, the previous key may be reused or a key is received from the AP again.

Optionally, as another embodiment, the AP may receive an association request frame sent by the STA, and if the association request key indicates that the STA supports to use a key to protect the downlink data request frame, the AP may generate the key.

Specifically, protecting the downlink data request frame by use of the key is a secure downlink data request mechanism. If the STA supports this downlink data request mechanism, the AP may generate the key.

120, the key is sent to the STA.

Optionally, as another embodiment, the AP may send a sleep mode response frame to the STA, and the sleep mode response frame may carry the encrypted key.

For example, the AP may generate the key after receiving the sleep mode request frame of the STA, and then send the key to the STA by use of the sleep mode response frame. The sleep mode response frame is a management frame, so the key carried in the sleep mode response frame may be encrypted by use of an existing security protection mechanism, for example, the security protection mechanism in a 802.11 protocol, in order to prevent a third party station from obtaining the key carried in the sleep mode response frame.

Optionally, as another embodiment, the AP may send an association response frame to the STA, and the association response frame carries the encrypted key.

For example, the AP may generate the key, on the condition that the association request frame received from the STA indicates that the STA supports the mechanism of protecting the downlink data request frame by use of the key. The key carried in the association response frame may be encrypted by the existing security protection mechanism, for example, the security protection mechanism in the 802.11 protocol, in order to prevent the third party station from obtaining the key.

Optionally, as another embodiment, the AP may send an encrypted data frame to the STA, and the encrypted data frame carries the key.

After generating the key, the AP may send the key to the STA by use of the encrypted data frame. For example, after receiving the sleep mode request frame, the AP generates the key and may send the key to the STA by use of an encrypted data frame different from the sleep mode response frame. Or, after receiving the association request frame, the AP generates the key and may send the key to the STA by use of an encrypted data frame different from the association response frame. In this case, there is no need to modify the format of the sleep mode response frame or the association response frame.

130, the downlink data request frame is received.

140, the downlink data request frame is verified according to the key, and a verification result is obtained.

150, if the verification result is that the downlink data request frame is correct, downlink data is sent to the STA.

The downlink data request frame may carry an identifier of the STA, and in order to prevent the third party station from pretending to be the STA to obtain the downlink data, the AP may verify the downlink data request frame. For example, if the downlink data request frame carries a key, the AP may verify the key carried in the downlink data request frame according to the key generated in step 110. If the key generated in step 110 is matched with the key carried in the downlink data request frame, the downlink data request frame may be verified to be correct. At this time, the AP may send the downlink data to the STA.

In addition, if the verification result is that the downlink data request frame is incorrect, the AP may not send the downlink data to the STA and send warning information.

For example, if the downlink data request frame does not carry a key matched with the key generated in step 110, or the carried key is not matched with the key generated in step 110, it may be considered that the downlink data request frame is not from the STA, or that the downlink data request frame may be from a malicious third party station. Then, the AP may not send the downlink data to the STA and send the warning information to the STA, a user or a network manager, so as to issue an attempt of stealing or deleting data cached by the AP for the STA in a network.

It should be noted that, the length of the above-mentioned key is variable, for example, the length of the key may be 16 bits (bit) to 64 bits. This length is large enough to ensure the secure connection between the AP and the STA.

This shows that, in the embodiment of the present invention, the AP may generate a key for the STA, and the key may be used for protecting the downlink data request frame of the STA. Therefore, when receiving the downlink data request frame carrying the identifier of the STA, in order to prevent that the downlink data request frame is sent by the third party station by pretending to be the STA, the AP may send the downlink data to the STA after verifying the downlink data request frame to be correct according to the key, in this case, the third party station may be prevented from pretending to be the STA to steal the downlink data from the AP, so that the network security may be ensured and the system performance may be improved.

In the embodiment of the present invention, the key is generated, the key is sent to the station, and after the downlink data request frame is received, if the downlink data request frame is verified to be correct according to the key, the downlink data is sent to the station, thus the third party station may be prevented from pretending to be the station to steal the downlink data, such that the network security may be ensured.

Fig.2 is a schematic flowchart of a method for transmitting data according to an embodiment of the present invention. The method of Fig.2 is implemented by an STA.

210, a key is received from an AP.

Optionally, as an embodiment, the STA may receive a sleep mode response frame from the AP, the sleep mode response frame carries the encrypted key, and the sleep mode response frame is sent by the AP after receiving a sleep mode request frame. The sleep mode request frame may indicate that the STA is about to enter into a sleep mode.

Before receiving the key from the AP, the STA may send the sleep mode request frame to the AP, and the sleep mode request frame indicates that it is about to enter into the sleep mode. In this way, after receiving the sleep mode request frame, the AP may generate the key and send the key by the sleep mode response frame. Since the sleep mode response frame is a management frame, so the key carried in the sleep mode response frame may be encrypted by use of an existing security protection mechanism, for example, the security protection mechanism in a 802.11 protocol, in order to prevent a third party station from obtaining the key.

Optionally, as another embodiment, the sleep mode request frame may indicate that the STA needs the key. In this way, the sleep mode request frame indicates that the STA needs the key, thus the AP may generate the key after receiving the sleep mode request frame.

Optionally, as another embodiment, the STA may receive an association response frame from the AP, the association response frame carries the encrypted key, the association response frame is sent by the AP after receiving an association request frame, and the association request frame may be used for indicating that the STA supports to use a key to protect a downlink data request frame.

Specifically, protecting the downlink data request frame by use of the key is a secure downlink data request mechanism. The STA may notify the AP by use of the association request frame that this downlink data request mechanism is supported, in this way, the AP may generate the key after receiving the association request frame and send the key by use of the association response frame. The key carried in the association response frame may be encrypted by use of the existing security protection mechanism, for example, the security protection mechanism in the 802.11 protocol.

Optionally, as another embodiment, the STA may receive an encrypted data frame from the AP, and the encrypted data frame carries the key.

For example, after receiving the association request frame, the AP may generate the key and send the key by the encrypted data frame different from the association response frame. Or, after receiving the sleep mode request frame, the AP may generate the key and send the key by the encrypted data frame different from the sleep mode response frame. In this case, there is no need to modify the format of the sleep mode response frame or the association response frame.

220, the downlink data request frame is sent to the AP, the downlink data request frame carries the encrypted key, and the key is used by the AP for verifying the downlink data request frame and obtaining a verification result.

Optionally, as another embodiment, the STA may send the downlink data request frame to the AP after waking up from the sleep mode.

For example, after waking up from the sleep mode, the STA hears about its own downlink data in a TIM domain of a beacon frame, then the STA may send the downlink data request frame to the AP and the key is carried in the downlink data request frame.

The key carried in the downlink data request frame may be encrypted by use of the existing security protection mechanism, for example, the security protection mechanism in the 802.11 protocol.

230, downlink data sent by the AP is received, wherein the downlink data is sent by the AP after the verification result is that the downlink data request frame is correct.

In order to prevent a third party station from pretending to be the STA to steal the downlink data, the AP may verify the downlink data request frame according to the key, and only when the verification is correct, the STA may receive the downlink data from the AP.

In the embodiment of the present invention, the key is received from the access point, the key is carried in the downlink data request frame sent to the access point, since the key is used by the access point for verifying the downlink data request frame and obtaining the verification result, the downlink data sent by the access point may be received only after the verification result is that the downlink data request frame is correct, thus the third party station may be prevented from stealing the downlink data from the access point, such that the network security may be ensured.

The embodiments of the present invention will be described below in detail in combination with specific examples. It should be noted that, these examples are only intended to help those skilled in the art to better understand the embodiments of the present invention, rather than limiting the scope of the embodiments of the present invention.

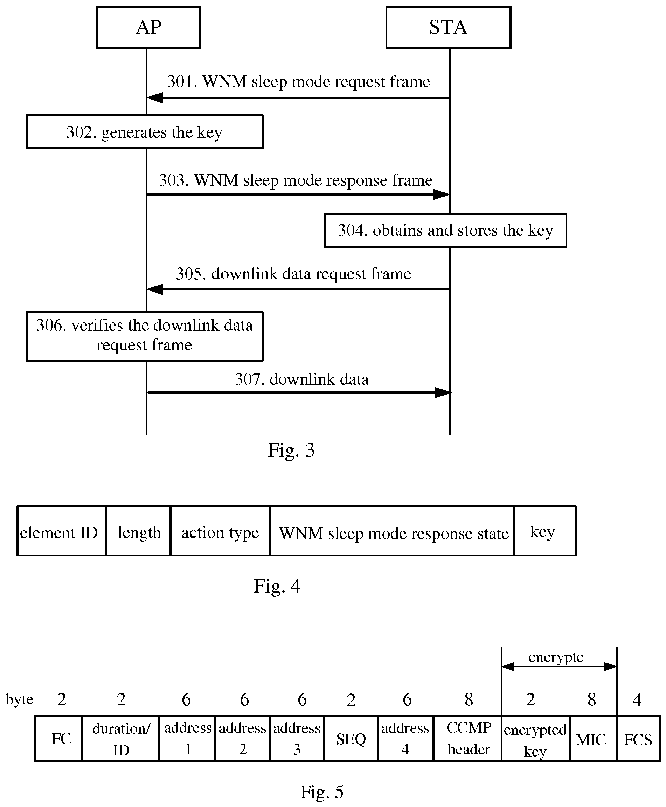

Fig.3 is a schematic flowchart of a process of a method for transmitting data according to an embodiment of the present invention.

In Fig.3, it is taken as an example for illustration that a sleep mode request frame is a wireless network management (WNM) sleep mode request frame.

301, an STA sends the WNM sleep mode request frame to an AP.

A WNM sleep mode is an expanded power saving mode for a non-AP STA. The STA may notify the AP that the STA itself is about to enter into the sleep mode and of a sleep time through the WNM sleep mode request frame.

Optionally, the STA may indicate that the STA needs a key through 1 bit in the WNM sleep mode request frame.

302, the AP generates the key.

For example, the AP may generate the key after receiving the WNM sleep mode request frame. Or, the AP may generate the key when the WNM sleep mode request frame is received and the WNM sleep mode request frame indicates that the STA needs the key.

The length of the key is variable, for example, the length of the key may be 16 bits to 64 bits, in this way, the secure connection between the AP and the STA may be ensured.

303, the AP sends a WNM sleep mode response frame to the STA, and the WNM sleep mode response frame carries the encrypted key.

The WNM sleep mode response frame is a management frame, the encrypted key carried in the WNM sleep mode response frame may be encrypted by use of an existing security protection mechanism, for example, the security protection mechanism in a 802.11 protocol, in order to prevent a third party station from obtaining the key carried in the WNM sleep mode response frame.

It should be understood that, in one BSS, the AP may be associated with multiple STAs, and the key generated by the AP for each STA and used for protecting the downlink data request frame thereof may be the same, thus the work of the AP may be simplified. Of course, the keys of the STAs may also be different. This is not limited in the embodiment of the present invention.

An example of a format of the WNM sleep mode response frame carrying the key may be as shown in Fig.4. Fig.4 is a schematic diagram of an example of a format of a WNM sleep mode response frame according to an embodiment of the present invention. In Fig.4, the WNM sleep mode response frame may include the key, and other fields included in the WNM sleep mode response frame, for example, element (Element) ID, length, action type (Action Type) and WNM sleep mode response state or the like, may refer to the prior art, and will not be described redundantly herein in order to avoid repetition.

304, the STA receives the WNM sleep mode response frame in step 303, and obtains and stores the key from the WNM sleep mode response frame.

The STA may enter into a sleep mode after obtaining and storing the key from the WNM sleep mode response frame.

305, the STA sends a downlink data request frame to the AP, and the downlink data request frame carries the encrypted key.

For example, the STA may send the downlink data request frame to the AP after waking up from the sleep mode.

In the prior art, since a PS-POLL frame is a control frame, it could not be sent in an encrypted manner. Therefore, the type of the downlink data request frame may be defined as data (Data) + PS-POLL, and the format may be different from that of the existing PS-POLL frame. According to the format of a data frame in the existing 802.11 protocol, an example of the format of the downlink data request frame may be as shown in Fig.5. Fig.5 is a schematic diagram of an example of a format of a downlink data request frame according to an embodiment of the present invention.

As shown in Fig.5, the downlink data request frame may adopt the format of the 802.11 data frame. In the existing 802.11 data frame, a subtype (Subtype) field in a frame control (Frame Control, FC) domain is a reserved field, in the embodiment of the present invention, the subtype field may be defined as Data + PS-POLL and is used for expressing the downlink data request frame.

The downlink data request frame may include a key, and the key may be encrypted. In addition, the downlink data request frame may further include other fields, for example duration/ID, address 1 to address 4, SEQ (Sequence, sequence), CCMP header, MIC (Message Integrity Code, message integrity code) and FCS (Frame Check Sequence, frame check sequence) or the like, the meanings of these fields may refer to the prior art, and will not be described redundantly herein in order to avoid repetition.

306, after receiving the downlink data request frame in step 305, the AP verifies the downlink data request frame according to the key generated in step 302 and obtains a verification result.

After receiving the downlink data request frame, the AP recovers the key carried in the downlink data request frame. The key carried in the downlink data request frame may be verified according to the key generated in step 302.

307, the AP sends downlink data to the STA if the verification result obtained in step 306 is that the downlink data request frame is correct.

For example, if the AP verifies that the key carried in the downlink data request frame is matched with the key generated in step 302, the downlink data request frame may be determined to be correct, and the AP may send the downlink data to the STA.

In addition, if the verification result is that the downlink data request frame is incorrect, for example, the key carried in the downlink data request frame is not matched with the key generated in step 302, the AP may not send the downlink data to the STA and send warning information, for example, the AP may send the warning information to the STA, a user or a network manager, so as to notify an attempt of stealing the downlink data in a network.

It should be noted that, the AP may carry the key in the WNM sleep mode response frame, and may also carry no key in the WNM sleep mode response frame while carrying the key by an encrypted data frame different from the WNM sleep mode response frame.

It should be understood that, the serial numbers of the above-mentioned processes do not mean the execution order, the execution order of the processes should be determined by the functions and internal logic thereof, and should not constitute any limit to the implementation processes of the embodiments of the present invention.

In the embodiment of the present invention, the key is generated, the key is sent to the station, and after the downlink data request frame is received, if the downlink data request frame is verified to be correct according to the key, the downlink data is sent to the station, thus a third party station may be prevented from pretending to be the station to steal the downlink data, such that the network security may be ensured.

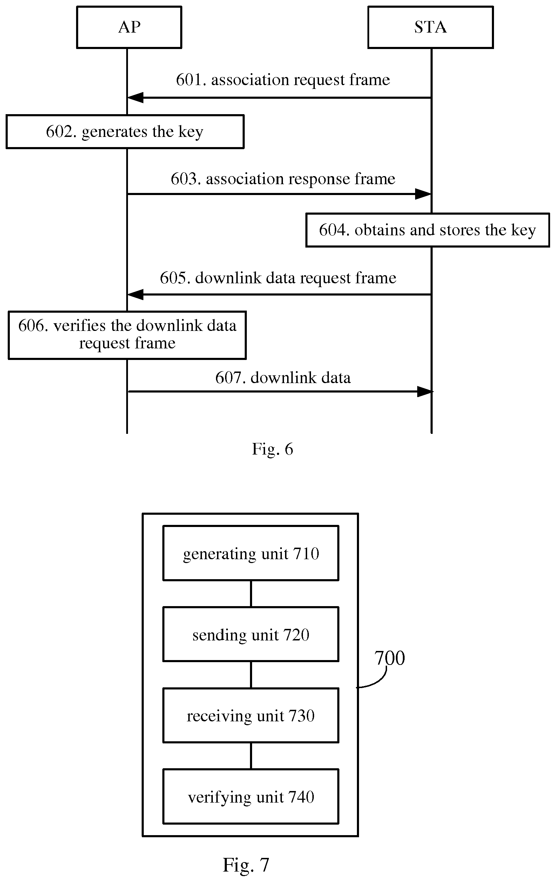

Fig.6 is a schematic flowchart of a process of a method for transmitting data according to an embodiment of the present invention.

601, an STA sends an association request frame to an AP, and the association request frame indicates that the STA supports to use a key to protect a downlink data request frame.

602, the AP generates the key after receiving the association request frame.

603, the AP sends an association response frame to the STA, and the association response frame carries the encrypted key.

The key carried in the association response frame may be encrypted by use of an existing security protection mechanism, for example, the security protection mechanism in 802.11 protocol, in order to prevent a third party station from obtaining the key.

Step 604 to step 607 are similar to step 304 to step 307 in Fig.3, and will not be described redundantly herein in order to avoid repetition.

It should be noted that, the AP may carry the key by the association response frame, and may also carry the key by an encrypted data frame different from the association response frame. This is not limited in the embodiment of the present invention.

It should be understood that, the serial numbers of the above-mentioned processes do not mean the execution order, the execution order of the processes should be determined by the functions and internal logic thereof, and should not constitute any limit to the implementation processes of the embodiments of the present invention.

In the embodiment of the present invention, the key is generated, the key is sent to the station, and after the downlink data request frame is received, if the downlink data request frame is verified to be correct according to the key, the downlink data is sent to the station, thus the third party station may be prevented from pretending to be the station to steal the downlink data, such that the network security may be ensured.

It should be noted that, the above-mentioned embodiments may be cooperatively used, for example, the key may be set up in an association process of the AP and the STA, and the key may also be updated in request and response of the sleep mode. This is not limited in the embodiment of the present invention.

Fig.7 is a schematic block diagram of an AP according to an embodiment of the present invention. The AP 700 of Fig.7 includes a generating unit 710, a sending unit 720, a receiving unit 730 and a verifying unit 740.

The generating unit 710 generates a key. The sending unit 720 sends the key to an STA. The receiving unit 730 receives a downlink data request frame, and the downlink data request frame carries an identifier of the STA. The verifying unit 740 verifies the downlink data request frame according to the key and obtains a verification result. The sending unit is further configured to send downlink data to the STA if the verification result is that the downlink data request frame is correct.

In the embodiment of the present invention, the key is generated, the key is sent to the station, and after the downlink data request frame is received, if the downlink data request frame is verified to be correct according to the key, the downlink data is sent to the station, thus a third party station may be prevented from pretending to be the station to steal the downlink data, such that the network security may be ensured.

Other functions and operations of the AP 700 may refer to the processes involving the AP in the method embodiments of Fig.1 to Fig.6, and will not be described redundantly herein in order to avoid repetition.

Optionally, as another embodiment, the generating unit 710 may generate the key after receiving a sleep mode request frame from the STA. The sleep mode request frame may be used for indicating that the STA is about to enter into a sleep mode.

Optionally, as another embodiment, the generating unit 710 may generate the key, after the receiving unit 730 receives the sleep mode request frame from the STA, and if the sleep mode request frame indicates that the STA needs the key.

Optionally, as another embodiment, the receiving unit 730 may also receive an association request frame sent by the STA. If the association request frame indicates that the station supports to use a key to protect the downlink data request frame, the generating unit 710 may generate the key.

Optionally, as another embodiment, the sending unit 720 may send a sleep mode response frame to the STA, and the sleep mode response frame carries the encrypted key.

Optionally, as another embodiment, the sending unit 720 may send an association response frame to the STA, and the association response frame carries the encrypted key.

Optionally, as another embodiment, the sending unit 720 may send an encrypted data frame to the STA, and the encrypted data frame carries the key.

In the embodiment of the present invention, the key is generated, the key is sent to the station, and after the downlink data request frame is received, if the downlink data request frame is verified to be correct according to the key, the downlink data is sent to the station, thus the third party station may be prevented from pretending to be the station to steal the downlink data, such that the network security may be ensured.

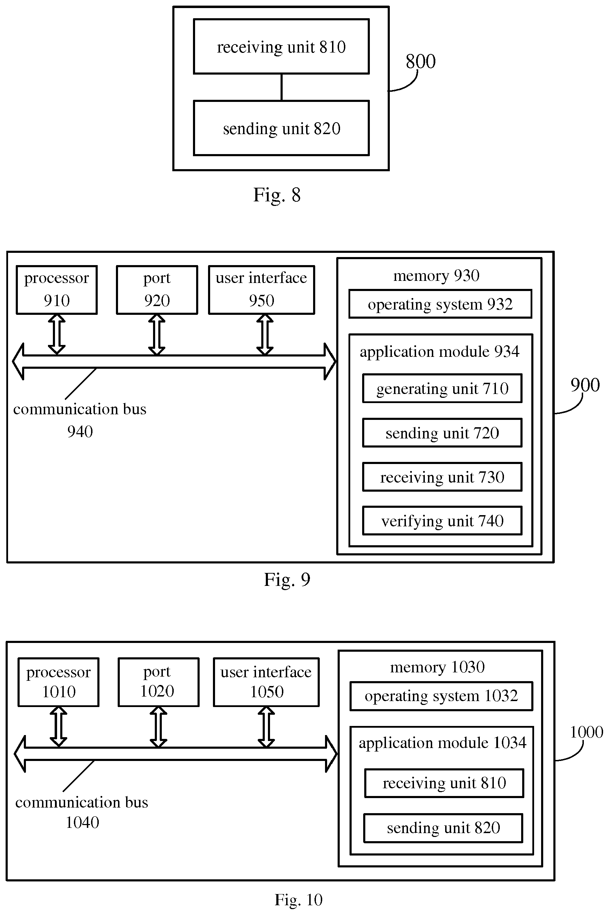

Fig.8 is a schematic block diagram of an STA according to an embodiment of the present invention. The STA 800 includes a receiving unit 810 and a sending unit 820.

The receiving unit 810 receives a key from an AP. The sending unit 820 sends a downlink data request frame to the AP, wherein the downlink data request frame carries the encrypted key, and the key is used by the AP for verifying the downlink data request frame and obtaining a verification result. The receiving unit 810 further receives downlink data sent by the AP, wherein the downlink data is sent by the AP after the verification result is that the downlink data request frame is correct.

In the embodiment of the present invention, the key is received from the access point, the key is carried in the downlink data request frame sent to the access point, since the key is used by the access point for verifying the downlink data request frame and obtaining the verification result, only after the verification result is that the downlink data request frame is correct, the downlink data sent by the access point may be received, thus a third party station may be prevented from stealing the downlink data from the access point, such that the network security may be ensured.

Other functions and operations of the STA 800 may refer to the processes involving the STA in the method embodiments of Fig.1 to Fig.6, and will not be described redundantly herein in order to avoid repetition.

Optionally, as an embodiment, the receiving unit 810 may receive a sleep mode response frame, which is generated by the AP after receiving a sleep mode request frame, and the sleep mode response frame carries the encrypted key. The sleep mode request frame may indicate that the STA is about to enter into a sleep mode.

Optionally, as another embodiment, the sleep mode request frame may indicate that the key is needed.

Optionally, as another embodiment, the receiving unit 810 may receive an association response frame from the AP, the association response frame carries the encrypted key, the association response frame is sent by the AP after receiving an association request frame, and the association request frame is used for indicating that using a key to protect the downlink data request frame is supported.

Optionally, as another embodiment, the receiving unit 810 may receive an encrypted data frame from the AP, and the encrypted data frame carries the key.

Optionally, as another embodiment, the sending unit 820 may send the downlink data request frame to the AP after the STA wakes up from the sleep mode.

In the embodiment of the present invention, the key is received from the access point, the key is carried in the downlink data request frame sent to the access point, since the key is used by the access point for verifying the downlink data request frame and obtaining the verification result, only after the verification result is that the downlink data request frame is correct, the downlink data sent by the access point may be received, thus the third party station may be prevented from stealing the downlink data from the access point, such that the network security may be ensured.

Fig.9 is a schematic diagram of a structure of an AP provided by an embodiment of the present invention. As shown in Fig.9, the AP 900 generally includes at least one processor 910, for example, a CPU, at least one port 920, a memory 930 and at least one communication bus 940. The communication bus 940 is used for achieving connection communication between these apparatuses. The processor 910 is used for executing an executable module stored in the memory 930, for example, a computer program; optionally, the AP includes a user interface 950, including but not limited to a display, a keyboard and a pointing device, for example, a mouse, a trackball (trackball), a touch panel or a touch display screen. The memory 930 may include a high speed RAM memory and may also include a non-volatile memory (non-volatile memory), for example, at least one disk memory. The communication connection of the AP and at least one STA is achieved by at least one port 920, and the communication connection with at least one network device node is achieved by at least one another port 920.

In some implementations, the memory 930 stores the following elements: an executable module or a data structure, or subsets thereof, or supersets thereof:
an operating system 932, includes a variety of system programs and configured to achieve a variety of basic services and process services based on hardware;
an application module 934, includes a variety of application programs and configured to achieve a variety of application services.

The application module 934 includes but not limited to a generating unit 710, a sending unit 720, a receiving unit 730 and a verifying unit 740.

Specific implementations of the units in the application module 932 refer to corresponding units in the embodiment as shown in Fig.7, and will not be described redundantly herein.

Fig.10 is a schematic diagram of a structure of an STA provided by an embodiment of the present invention. As shown in Fig. 10, the STA generally includes at least one processor 1010, for example, a CPU, at least one port 1020, a memory 1030 and at least one communication bus 1040. The communication bus 1040 is used for achieving connection communication between these apparatuses. The processor 1010 is used for executing an executable module stored in the memory 1030, for example, a computer program; optionally, the STA includes a user interface 1050, including but not limited to a display, a keyboard and a pointing device, for example, a mouse, a trackball (trackball), a touch panel or a touch display screen. The memory 1030 may include a high speed RAM memory and may also include a non-volatile memory (non-volatile memory), for example, at least one disk memory. The communication connection of the STA and at least one AP is achieved by at least one port 1020, and the communication connection with at least one STA node is achieved by at least one another port 1020.

In some implementations, the memory 1030 stores the following elements: an executable module or a data structure, or subsets thereof, or supersets thereof:
an operating system 1032, includes a variety of system programs and configured to achieve a variety of basic services and process services based on hardware;
an application module 1034, includes a variety of application programs and configured to achieve a variety of application services.

The application module 1034 includes but not limited to a receiving unit 810 and a sending unit 820.

Specific implementations of the units in the application module 1032 refer to corresponding units in the embodiment as shown in Fig.8, and will not be described redundantly herein.

Those of ordinary skill in the art may realize that the units and algorithmic steps of the examples described in conjunction with the embodiments of the present invention may be implemented by electronic hardware or a combination of computer software and electronic hardware. Whether these functions are executed in a hardware or software mode depends on the specific applications and design constraint conditions of the technical solution. For each specific application, professionals may implement the described functions by different methods, but this implementation shall not be considered as being beyond the scope of the present invention.

Those skilled in the art to which the present invention pertains may clearly understand that, for the purpose of better convenience and briefness in description, for the specific working processes of the above-described systems, devices and units, reference could be made to the corresponding processes in the embodiments of the aforementioned methods, and repeated description is not given here.

In the several embodiments provided in the present application, it shall be understood that the disclosed systems, devices and methods may be realized in other manners. For example, the embodiments of the above-described devices are only exemplary, for example, the division of the units is only a logic function division, other division manners may be adopted in practice, e.g., a plurality of units or components may be combined or integrated in another system, or some characteristics may be omitted or not executed. From another point of view, the displayed or discussed mutual coupling or direct coupling or communication connection may be indirect coupling or communication connection of devices or units through some interfaces, and may also be in electrical, mechanical or other forms.

The units illustrated as separate components may be or may not be physically separated, and the components displayed as units may be or may not be physical units, that is to say, the components may be positioned at one place or may also be distributed on a plurality of network units. The objectives of the solutions of the embodiments may be fulfilled by selecting part of or all of the units according to actual needs.

In addition, in various embodiments of the present invention, the functional units may be integrated in one processing unit, or the units may separately and physically exist, or two or more units may be integrated in one unit.

When the functions are realized in the form of software functional units and sold or used as independent products, the functions may be stored in a computer-readable storage medium. Based on such an understanding, the technical solutions of the present invention substantially, or the part of the present invention making contribution to the prior art, or part of the technical solutions may be embodied in the form of a software product, and the computer software product is stored in a storage medium, which includes a plurality of instructions enabling computer device (which may be a personal computer, a server, network device or the like) to execute all of or part of the steps in the methods of the embodiments of the present invention. The aforementioned storage medium includes: various media capable of storing program codes, such as a U disk, a mobile hard disk, a read-only memory (ROM, Read-Only Memory), a random access memory (RAM, Random Access Memory), a disk, an optical disk or the like.

The foregoing description is the specific implementations of the present invention only, but the protection scope of the present invention is not limited to this, any skilled who is familiar with this art could readily think of variations or substitutions within the disclosed technical scope of the present invention, and these variations or substitutions shall fall within the protection scope of the present invention. Thus, the protection scope of the claims should prevail over the protection scope of the present invention.

## Claims

1. A method for transmitting data, comprising:
generating (110), by an access point, AP, a key after receiving a sleep mode request frame from a station;
sending (120), by the AP, the key to the station;
receiving (130), by the AP, a downlink data request frame from the station;
verifying (140), by the AP, the downlink data request frame according to the key and obtaining a verification result;
sending (150), by the AP, downlink data to the station if the verification result is that the downlink data request frame is correct.

2. The method of claim 1, wherein the generating the key after receiving a sleep mode request frame from the station, comprises:
after receiving the sleep mode request frame from the station, if the sleep mode request frame indicates that the station needs the key, generating the key.

3. The method of claim 1 or 2, wherein the sending the key to a station, comprises:
sending a sleep mode response frame to the station, wherein the sleep mode response frame carries the encrypted key.

4. A method for transmitting data, comprising:
receiving (210), by a station, a sleep mode response frame from an access point, wherein the sleep mode response frame carries a encrypted key, and the sleep mode response frame is sent by the access point after receiving a sleep mode request frame from the station; sending (220), by the station, a downlink data request frame to the access point, wherein the downlink data request frame carries the encrypted key, and the key is used by the access point for verifying the downlink data request frame and obtaining a verification result;
receiving (230), by the station, downlink data sent by the access point, wherein the downlink data are sent by the access point after the verification result is that the downlink data request frame is correct.

5. The method of claim 4, wherein the sleep mode request frame indicates that the key is needed.

6. An access point (700), comprising:
a generating unit (710), configured to generate a key after receiving a sleep mode request frame from a station;
a sending unit (720), configured to send the key to the station;
a receiving unit (730), configured to receive a downlink data request frame from the station;
a verifying unit (740), configured to verify the downlink data request frame according to the key and obtain a verification result;
the sending unit (720) is further configured to send downlink data to the station if the verification result is that the downlink data request frame is correct.

7. The access point of claim 6, wherein the generating unit is specifically configured to generate the key, after the receiving unit receives the sleep mode request frame from the station, and if the sleep mode request frame indicates that the station needs the key.

8. The access point of claim 6 or 7, wherein the sending unit is specifically configured to send a sleep mode response frame to the station, and the sleep mode response frame carries the encrypted key.

9. A station (800), comprising:
a receiving unit (810), configured to receive a sleep mode response frame from an access point, the sleep mode response frame carries a encrypted key, and the sleep mode response frame is sent by the access point after receiving a sleep mode request frame from the station; a sending unit (820), configured to send a downlink data request frame to the access point, wherein the downlink data request frame carries the encrypted key, and the key is used by the access point for verifying the downlink data request frame and obtaining a verification result;
the receiving unit is further configured to receive downlink data sent by the access point, wherein the downlink data are sent by the access point after the verification result is that the downlink data request frame is correct.

10. The station of claim 9, wherein the sleep mode request frame indicates that the key is needed.

## Patentansprüche

1. Verfahren zum Übertragen von Daten, das Folgendes umfasst:
Erzeugen (110) durch einen Zugriffspunkt, AP, eines Schlüssels nach Empfangen eines Schlafmodusanforderungsrahmens von einer Station;
Senden (120) durch den AP des Schlüssels an die Station;
Empfangen (130) durch den AP eines Abwärtsdatenanforderungsrahmens von der Station;
Verifizieren (140) durch den AP des Abwärtsdatenanforderungsrahmens gemäß dem Schlüssel und Erhalten eines Verifizierungsergebnisses;
Senden (150) durch den AP von Abwärtsdaten an die Station, wenn das Verifizierungsergebnis besagt, dass der Abwärtsdatenanforderungsrahmen korrekt ist.

2. Verfahren nach Anspruch 1, wobei das Erzeugen des Schlüssels nach Empfangen eines Schlafmodusanforderungsrahmens von der Station Folgendes umfasst:
nach Empfangen des Schlafmodusanforderungsrahmens von der Station, wenn der Schlafmodusanforderungsrahmen anzeigt, dass die Station den Schlüssel benötigt, Erzeugen des Schlüssels.

3. Verfahren nach Anspruch 1 oder 2, wobei das Senden des Schlüssels an eine Station Folgendes umfasst:
Senden eines Schlafmodusantwortrahmens an die Station, wobei der Schlafmodusantwortrahmen den verschlüsselten Schlüssel enthält.

4. Verfahren zum Übertragen von Daten, das Folgendes umfasst:
Empfangen (210) durch eine Station eines Schlafinodusantwortrahmens von einem Zugriffspunkt, wobei der Schlafinodusantwortrahmen einen verschlüsselten Schlüssel enthält und der Schlafinodusantwortrahmen vom Zugriffspunkt gesendet wird, nachdem er von der Station einen Schlafmodusanforderungsrahmen empfangen hat;
Senden (220) durch die Station eines Abwärtsdatenanforderungsrahmens an den Zugriffspunkt, wobei der Abwärtsdatenanforderungsrahmen den verschlüsselten Schlüssel enthält und der Schlüssel vom Zugriffspunkt zum Verifizieren des Abwärtsdatenanforderungsrahmens und zum Erhalten eines Verifizierungsergebnisses verwendet wird;
Empfangen (230) durch die Station von Abwärtsdaten, die vom Zugriffspunkt gesendet werden, wobei die Abwärtsdaten vom Zugriffspunkt gesendet werden, nachdem das Verifizierungsergebnis besagt, dass der Abwärtsdatenanforderungsrahmen korrekt ist.

5. Verfahren nach Anspruch 4, wobei der Schlafmodusanforderungsrahmen anzeigt, dass der Schlüssel benötigt wird.

6. Zugriffspunkt (700), der Folgendes umfasst:
eine Erzeugungseinheit (710), die dazu ausgelegt ist, nach Empfangen eines Schlafmodusanforderungsrahmens von einer Station einen Schlüssel zu erzeugen;
eine Sendeeinheit (720), die dazu ausgelegt ist, den Schlüssel an die Station zu senden;
eine Empfangseinheit (730), die dazu ausgelegt ist, einen
Abwärtsdatenanforderungsrahmen von der Station zu empfangen;
eine Verifizierungseinheit (740), die dazu ausgelegt ist, den Abwärtsdatenanforderungsrahmen gemäß dem Schlüssel zu verifizieren und ein Verifizierungsergebnis zu erhalten;
wobei die Sendeeinheit (720) ferner dazu ausgelegt ist, Abwärtsdaten an die Station zu senden, wenn das Verifizierungsergebnis besagt, dass der Abwärtsdatenanforderungsrahmen korrekt ist.

7. Zugriffspunkt nach Anspruch 6, wobei die Erzeugungseinheit spezifisch dazu ausgelegt ist, den Schlüssel zu erzeugen, nachdem die Empfangseinheit den Schlafmodusanforderungsrahmen von der Station empfängt und wenn der Schlafmodusanforderungsrahmen anzeigt, dass die Station den Schlüssel benötigt.

8. Zugriffspunkt nach Anspruch 6 oder 7, wobei die Sendeeinheit spezifisch dazu ausgelegt ist, einen Schlafmodusantwortrahmen an die Station zu senden, und der Schlafinodusantwortrahmen den verschlüsselten Schlüssel enthält.

9. Station (800), die Folgendes umfasst:
eine Empfangseinheit (810), die dazu ausgelegt ist, einen Schlafmodusantwortrahmen von einem Zugriffspunkt zu empfangen, wobei der Schlafinodusantwortrahmen einen verschlüsselten Schlüssel enthält und der Schlafmodusantwortrahmen vom Zugriffspunkt gesendet wird, nachdem er von der Station einen Schlafmodusanforderungsrahmen empfangen hat;
eine Sendeeinheit (820), die dazu ausgelegt ist, einen Abwärtsdatenanforderungsrahmen an den Zugriffspunkt zu senden, wobei der Abwärtsdatenanforderungsrahmen den verschlüsselten Schlüssel enthält und der Schlüssel vom Zugriffspunkt zum Verifizieren des Abwärtsdatenanforderungsrahmens und zum Erhalten eines Verifizierungsergebnisses verwendet wird;
wobei die Empfangseinheit ferner dazu ausgelegt ist, Abwärtsdaten zu empfangen, die vom Zugriffspunkt gesendet werden, wobei die Abwärtsdaten vom Zugriffspunkt gesendet werden, nachdem das Verifizierungsergebnis besagt, dass der Abwärtsdatenanforderungsrahmen korrekt ist.

10. Station nach Anspruch 9, wobei der Schlafmodusanforderungsrahmen anzeigt, dass der Schlüssel benötigt wird.

## Revendications

1. Procédé pour transmettre des données, consistant à :
générer (110), au moyen d'un point d'accès (AP), une clé après la réception d'une trame de demande de mode veille en provenance d'une station ;
envoyer (120), au moyen du point d'accès, la clé à la station ;
recevoir (130), au moyen du point d'accès, une trame de demande de données de liaison descendante en provenance de la station ;
vérifier (140), au moyen du point d'accès, la trame de demande de données de liaison descendante en fonction de la clé et obtenir un résultat de vérification ;
envoyer (150), au moyen du point d'accès, des données de liaison descendante à la station si le résultat de vérification est que la trame de demande de données de liaison descendante est correcte.

2. Procédé selon la revendication 1, dans lequel la génération de la clé après la réception d'une trame de demande de mode veille en provenance d'une station consiste :
après la réception de la trame de demande de mode veille en provenance de la station, si la trame de demande de mode veille indique que la station a besoin de la clé, à générer la clé.

3. Procédé selon la revendication 1 ou 2, dans lequel l'envoi de la clé à une station consiste à :
envoyer une trame de réponse de mode veille à la station, dans lequel la trame de réponse de mode veille comporte la clé cryptée.

4. Procédé pour transmettre des données, consistant à :
recevoir (210), au moyen d'une station, une trame de réponse de mode veille en provenance d'un point d'accès, dans lequel la trame de réponse de mode veille comporte une clé cryptée et la trame de réponse de mode veille est envoyée par le point d'accès après la réception d'une trame de demande de mode veille en provenance de la station ;
envoyer (220), au moyen de la station, une trame de demande de données de liaison descendante au point d'accès, dans lequel la trame de demande de données de liaison descendante comporte la clé cryptée et la clé est utilisée par le point d'accès pour vérifier la trame de demande de données de liaison descendante et obtenir un résultat de vérification ;
recevoir (230), au moyen de la station, des données de liaison descendante envoyées par le point d'accès, dans lequel les données de liaison descendante sont envoyées par le point d'accès après que le résultat de vérification est que la trame de demande de données de liaison descendante est correcte.

5. Procédé selon la revendication 4, dans lequel la trame de demande de mode veille indique que la clé est nécessaire.

6. Point d'accès (700), comprenant :
une unité de génération (710), configurée pour générer une clé après la réception d'une trame de demande de mode veille en provenance d'une station ;
une unité d'envoi (720), configurée pour envoyer la clé à la station ;
une unité de réception (730), configurée pour recevoir une trame de demande de données de liaison descendante en provenance de la station ;
une unité de vérification (740), configurée pour vérifier la trame de demande de données de liaison descendante en fonction de la clé et obtenir un résultat de vérification ;
l'unité d'envoi (720) est en outre configurée pour envoyer des données de liaison descendante à la station si le résultat de vérification est que la trame de demande de données de liaison descendante est correcte.

7. Point d'accès selon la revendication 6, dans lequel l'unité de génération est spécialement configurée pour générer la clé après que l'unité de réception reçoit la trame de demande de mode veille en provenance de la station et si la trame de demande de mode veille indique que la station a besoin de la clé.

8. Point d'accès selon la revendication 6 ou 7, dans lequel l'unité d'envoi est spécialement configurée pour envoyer une trame de réponse de mode veille à la station et la trame de réponse de mode veille comporte la clé cryptée.

9. Station (800), comprenant :
une unité de réception (810), configurée pour recevoir une trame de réponse de mode veille en provenance d'un point d'accès, la trame de réponse de mode veille comporte une clé cryptée et la trame de réponse de mode veille est envoyée par le point d'accès après la réception d'une trame de demande de mode veille en provenance de la station ;
une unité d'envoi (820), configurée pour envoyer une trame de demande de données de liaison descendante au point d'accès, dans laquelle la trame de demande de données de liaison descendante comporte la clé cryptée et la clé est utilisée par le point d'accès pour vérifier la trame de demande de données de liaison descendante et obtenir un résultat de vérification ;
l'unité de réception est en outre configurée pour recevoir des données de liaison descendante envoyées par le point d'accès, dans laquelle les données de liaison descendante sont envoyées par le point d'accès après que le résultat de vérification est que la trame de demande de données de liaison descendante est correcte.

10. Station selon la revendication 9, dans laquelle la trame de demande de mode veille indique que la clé est nécessaire.
